(19) Europäisches Patentamt
European Patent Office
Office européen des brevets

(11) **EP 4 245 804 A1**

(12) **EUROPEAN PATENT APPLICATION**
published in accordance with Art. 153(4) EPC

(43) Date of publication:
**20.09.2023 Bulletin 2023/38**

(21) Application number: **21891948.8**

(22) Date of filing: **11.11.2021**

(51) International Patent Classification (IPC):
**C08L 1/04** *(2006.01)*   **C08L 101/00** *(2006.01)*
**C08K 3/00** *(2018.01)*

(52) Cooperative Patent Classification (CPC):
**C08K 3/00; C08L 1/04; C08L 101/00**

(86) International application number:
**PCT/JP2021/041521**

(87) International publication number:
**WO 2022/102703 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.11.2020   JP 2020189128**

(71) Applicant: **Toagosei Co., Ltd.**
**Tokyo, 105-0003 (JP)**

(72) Inventors:
• **MATSUKI, Shiroshi**
**Nagoya-shi, Aichi 455-0026 (JP)**

• **TSUIKI, Toshihiko**
**Nagoya-shi, Aichi 455-0026 (JP)**
• **KAMIYA, Daisuke**
**Nagoya-shi, Aichi 455-0026 (JP)**
• **OKAZAKI, Eiichi**
**Nagoya-shi, Aichi 455-0026 (JP)**
• **KAYANO, Hidenari**
**Nagoya-shi, Aichi 455-0026 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **METHOD FOR MANUFACTURING NANOCELLULOSE-CONTAINING COMPOSITION**

(57)   The present invention has an object to provide an efficient production method of a nanocellulose-containing composition. The object can be achieved by a production method of a composition containing nanocellulose, including: a step of stirring a mixture containing oxidized cellulose and a component constituting the composition other than the nanocellulose to fibrillate the oxidized cellulose into the nanocellulose, wherein the oxidized cellulose includes an oxide of a cellulose raw material by a hypochlorous acid or a salt thereof.

EP 4 245 804 A1

**Description**

**Technical Field**

The present invention relates to a production method of a nanocellulose-containing composition.

**Background Art**

Various techniques for producing a nanocellulose material such as cellulose nanofibers (hereinafter referred to as "CNF") by oxidizing various cellulose raw material with an oxidizing agent and refining the size of the resulting oxidized cellulose have been proposed (for example, see Patent Documents 1 and 2).
Patent Document 1 indicates that a cellulose raw material is oxidized using a hypochlorous acid or a salt thereof as an oxidizing agent in a high concentration condition under which the available chlorine concentration in the reaction system is 14% to 43% by mass to obtain oxidized cellulose, and the size of the oxidized cellulose is refined to obtain CNF. In addition, Patent Document 2 indicates that a cellulose raw material is oxidized using a hypochlorous acid or a salt thereof as an oxidizing agent in a condition under which the available chlorine concentration in the reaction system is set to 6% to 14% by mass while adjusting the pH to 5.0 to 14.0 to obtain oxidized cellulose, and the size of the oxidized cellulose is refined to obtain CNF. These techniques perform oxidation without N-oxyl compounds, such as a 2,2,6,6-tetramethyl-1-piperidinyl-N-oxyl radical (TEMPO), as a catalyst. Therefore, no N-oxyl compound remains in cellulose fibers, and nanocellulose materials can be thus produced while reducing the impact on the environment or the like.
Patent Document 3 discloses a production method including fibrillating pulp with a degree of polymerization of cellulose of 100 to 500 in a fibrillating resin to obtain a resin composition containing cellulose nanofibers and the fibrillating resin. Patent Document 4 discloses a method including the steps of mixing acetylated cellulose fibers and a resin for masterbatches and kneading the mixture in a twin screw kneader at a heating temperature to produce a masterbatch containing acetylated cellulose nanofibers derived from the acetylated cellulose fibers and the resin for masterbatches.

Citation List

Patent Document

Patent Document 1: WO 2018/230354

Patent Document 2: WO 2020/027307

Patent Document 3: WO 2015/068818

Patent Document 4: Japanese Patent Application Publication No. 2020-128513

**Summary**

Technical Problem

Patent Documents 1 and 2 disclose a specific example for producing a nanocellulose material by refining the size of oxidized cellulose, in which a nanocellulose material (which may be simply referred to as nanocellulose) was obtained by a mechanical fibrillation treatment by a mechanical process using an ultrasonic homogenizer. The thus-obtained nanocellulose is blended with other materials so as to be compounded in accordance with various applications. However, since the nanocellulose obtained as described above is obtained through a mechanical fibrillation treatment, higher production costs and lower production efficiency are caused. Therefore, the production of products blended with other materials also has problems of cost increase and efficiency such as productivity.
Patent Document 3 and 4 disclose methods of fibrillating pulp or acetylated cellulose fibers in a resin to form cellulose nanofibers. However, a cellulose fiber used in these methods is pulp itself or a modified cellulose fiber. Therefore, an energy load is required for fibrillating, and a resin composition containing nanocellulose cannot be efficiency obtained.
The present invention has been completed in the light of the matters described above and has a main object to provide a method for efficiently obtaining a nanocellulose-containing composition.

Solution to Problem

The present inventors have made intensive studies and, as a result, found that using a specific oxidized cellulose can efficiently provide a nanocellulose-containing composition while omitting the step of the mechanical fibrillation treatment for refining the size of the oxidized cellulose and finally completed the present invention.

According to the present invention, the following means are provided.

[1] A production method of a composition containing nanocellulose, the method including:

a step of stirring a mixture containing oxidized cellulose and a component constituting the composition other than the nanocellulose to fibrillate the oxidized cellulose into the nanocellulose,
the oxidized cellulose including an oxide of a cellulose raw material by a hypochlorous acid or a salt thereof.

[2] The production method according to [1], wherein the mixture further contains a dispersion medium.

[3] A production method of a composition containing nanocellulose, the method including:

a step of stirring oxidized cellulose to fibrillate the oxidized cellulose into the nanocellulose and consecutively adding a component constituting the composition other than the nanocellulose,
the oxidized cellulose including an oxide of a cellulose raw material by a hypochlorous acid or a salt thereof.

[4] The production method according to [3], wherein the stirring of the oxidized cellulose and the addition of the component are performed in one-pot.

[5] The production method according to [3] or [4], wherein the oxidized cellulose is dispersed in a dispersion medium.

[6] The production method according to any one of [1] to [5], wherein the oxidized cellulose is substantially free of a N-oxyl compound.

[7] The production method according to any one of [1] to [6], wherein the oxidized cellulose has a degree of polymerization of 600 or less.

[8] The production method according to any one of [1] to [7], wherein a light transmittance of a nanocellulose water dispersion is 60% or more, the nanocellulose water dispersion being obtained by a fibrillation treatment of a water dispersion of the oxidized cellulose with a concentration of 0.1% by mass with a planetary centrifugal mixer under a condition of an orbital speed of 2000 rpm and a rotation speed of 800 rpm for 10 minutes.

[9] The production method according to any one of [1] to [8], wherein the stirring is performed in an in-liquid disperser.

[10] The production method according to any one of [1] to [9], wherein the component contains an inorganic particle.

[11] The production method according to any one of [1] to [9], wherein the component contains a resin or a rubber, or a raw material monomer thereof.

[12] The production method according to any one of [1] to [11], wherein a total amount of the oxidized cellulose and the nanocellulose contained in the composition is 0.1% to 90% by mass based on the total mass of components (excluding solvents and dispersion mediums) constituting the composition.

Advantageous Effects of Invention

According to the production method of the present invention, a nanocellulose-containing composition containing nanocellulose and blending components can be efficiently obtained.

The production method of the present invention is a production method of a nanocellulose-containing composition containing nanocellulose and at least one blending component.

**Description of Embodiments**

One aspect of the production method of the present invention includes:

a step of stirring a mixture containing oxidized cellulose and a component (also referred to as a "blending component") constituting a composition other than nanocellulose to fibrillate the oxidized cellulose into nanocellulose. Components stirred together with oxidized cellulose may be some or all of the components constituting composition (excluding nanocellulose). When some components are stirred together with oxidized cellulose, the remaining components may be added after stirring.

One aspect of the production method of the present invention includes the steps of:

preparing oxidized cellulose;

obtaining a mixture of the oxidized cellulose and at least one blending component; and

stirring the mixture to obtain a nanocellulose-containing composition.

In the present description, the above aspect of fibrillating oxidized cellulose under the presence of other components is also referred to as Production Method I. It is preferred that a composition in the Production Method I does not consist solely of nanocellulose and a dispersion medium.

One aspect of the production method of the present invention includes:
a step of stirring oxidized cellulose to fibrillate the oxidized cellulose into the nanocellulose and consecutively mixing a component constituting the composition other than the nanocellulose.

One aspect of the production method of the present invention includes

preparing oxidized cellulose;

stirring the oxidized cellulose and consecutively adding at least one blending component to obtain a nanocellulose-containing composition.

In the present description, the above aspect of fibrillating oxidized cellulose and consecutively mixing fibrillated oxidized cellulose with other components is also referred to as Production Method II.

The oxidized cellulose in the present invention includes an oxide of a cellulose raw material by a hypochlorous acid or a salt thereof.

In a conventional method, even chemical treatments, biological treatments, and the like are performed as a pretreatment of a mechanical fibrillation treatment, a mechanical fibrillation treatment is finally performed to obtain nanocellulose.

The present inventors have found that oxidized cellulose obtained by oxidizing a cellulose raw material with a hypochlorous acid or a salt thereof is excellent in fibrillatability. Furthermore, the present inventors have found that the oxidized cellulose described above can be induced into nanocellulose, even by light stirring without using a mechanical fibrillation treatment apparatus used for obtaining a conventional nanocellulose. Until now, nanocellulose has been used when nanocellulose is mixed or compounded with other materials. In contrast, according to the production method of the present invention, oxidized cellulose is added when other materials are dispersed or emulsified, and stirred lightly to afford nanocellulose from the oxidized cellulose, resulting in mixing or compounding other materials and nanocellulose. As described above, the production method of the present invention can omit a step of mechanical fibrillation for producing a nanocellulose-containing composition, and is excellent in efficiency.

In the production method of the present invention, at least a part of oxidized cellulose can be fibrillated, and the size of the part of oxidized cellulose can be refined by stirring. As a result, a nanocellulose-containing composition containing nanocellulose and at least one blending component can be obtained. Stirring in the present invention is not particularly limited as long as the size of a part of oxidized cellulose can be refined by the stirring, and may be normal stirring. Furthermore, stirring in the present invention is not particularly limited as long as it is an operation of dispersing components constituting the nanocellulose-containing composition. Furthermore, oxidized cellulose should be refined in size to the degree that can obtain the function of nanocellulose, and a part of oxidized cellulose may remain without being refined in size. Accordingly, the nanocellulose-containing composition obtained by the production method of the present invention may partly contain oxidized cellulose.

In Production Method I of the present invention, the order or method of adding oxidized cellulose and blending components is not particularly limited when a mixture of oxidized cellulose and the blending components are obtained.

In Production Method II of the present invention, oxidized cellulose is stirred, and consecutively, at least one blending component is added. More specifically, one mode of Production Method II of the present invention is a method of stirring oxidized cellulose to refine the size of at least part of the oxidized cellulose and, after that, consecutively adding at least part of the blending component. Here, "consecutively" means a procedure wherein the size refinement of at least part of oxidized cellulose by stirring and the addition of blending components are performed in series. A specific mode of performing stirring and addition of blending components in series is not particularly limited, and examples thereof include a mode of operating stirring oxidized cellulose to refine the size and adding at least one blending component in a one-pot way; a mode of adding at least one blending component while stirring oxidized cellulose simultaneously; and the like. As such, a user of oxidized cellulose can refine the size of oxidized cellulose him/herself to obtain and use nanocellulose.

As described above, the stirring in the present invention is not particularly limited as long as it is an operation of dispersing components constituting the nanocellulose-containing composition, and, for example, velocity fields and velocity fluctuations of any intensity; collision on inclusions and obstacles; ultrasounds; pressure loading; and the like may be utilized. For such a dispersing operation, an in-liquid disperser may preferably be used. Accordingly, one mode of the production method of the present invention is a production method in which stirring is performed in an in-liquid disperser.

The in-liquid disperser is not particularly limited, and examples thereof include a method using a homomixer, a magnetic stirrer, a stirring rod, a stirring blade-attached stirrer, a disper-type mixer, a homogenizer, an external circulation stirring, a planetary centrifugal mixer, a vibration-type stirrer, an ultrasonic disperser, and the like. Other examples of in-liquid dispersers include, in addition to the devices mentioned above, a rotational share-type stirrer, a colloid mill, a roll mill, a pressure homogenizer, a container-driving mill, a medium stirring mill, and the like. Furthermore, a kneader may be used as the in-liquid disperser.

A rotational share-type stirrer is an apparatus that disperses a stirring target by passing through the gap between the rotational blade and an outer tube, and the stirring target is dispersed by shear flow through the gap and intense velocity fluctuations before and after the gap. The peripheral speed at the blade tip end of the rotation blade is not particularly limited and should be normally 100 m/s or less. The peripheral speed may preferably be 50 m/s or less, more preferably 30 m/s or less, and further preferably 15 m/s or less from cost and production efficiency. The lower limit of the peripheral speed is not particularly limited and should be normally over 0 m/s.

A colloid mill is an apparatus that disperses an object by share flow through the gap between a rotation disk and a fixed disk. A roll mill is an apparatus that disperses an object by share force and compression force using the gaps between a plurality of rotating rolls.

A pressure homogenizer is used as a disperser that discharges slurry or the like from a pore at high pressure and is also referred to as a pressure injection disperser. As the pressure homogenizer, a high-pressure homogenizer is preferred. A high-pressure homogenizer is a homogenizer with the ability to discharge slurry at, for example, 10 MPa or higher, preferably 100 MPa or higher. The upper limit of a high-pressure homogenizer is not particularly limited and may be 400 MPa or less. The upper limit of the pressure of a high-pressure homogenizer is preferably 200 MPa or less, more preferably 100 MPa or less, further preferably 50 MPa or less, and still further preferably 30 MPa or less from cost and production efficiency. Examples of high-pressure homogenizers include counter-impact high-pressure homogenizers such as microfluidizers and wet jet mills.

A container-driving mill is an apparatus that disperses an object by collision and friction of media, such as balls, in a container. Specific examples include a rotation mill, a vibration mill, a planetary mill, and the like.

A medium stirring mill is an apparatus that disperses an object by the impact force of media and share force using media such as balls and beads. Specific examples thereof include an attritor and a bead mill (sand mill).

A kneader is an apparatus that performs the operation (also referred to as kneading) of wetting powder or the like with a liquid. Specific examples thereof include a double-arm type kneader (an apparatus that disperses an object with a twin-screw impeller in two semi-cylindrical containers); a Banbury mixer (a closed system, an apparatus that disperses an object under pressure); extrusion kneaders such as a screw extruder, a ko-kneader, or an extruder; and the like.

These apparatuses may be used singly or in a combination of two or more thereof.

Size refinement of oxidized cellulose can be promoted by stirring using such an apparatus, but stirring may be continued until the constitutional components of a nanocellulose-containing composition are homogenized or emulsified. This enables uniform dispersion of nanocellulose in a nanocellulose-containing composition or allows a nanocellulose-containing composition to be obtained as an emulsion.

Stirring is preferably performed in a condition where oxidized cellulose and a dispersion medium are mixed. Accordingly, it is preferred that the mixture containing oxidized cellulose and at least one blending component in Production Method I further contains a dispersion medium. In addition, oxidized cellulose in Production Method II is preferred to be dispersed in a dispersion medium.

The dispersion medium is not particularly limited and may be selected as appropriate according to the purpose. Specific examples of dispersion media include water, alcohols, ethers, ketones, N,N-dimethylformamide, N,N-dimethylacetoamide, dimethyl sulfoxide, and the like. Solvents may be used singly or in a combination of two or more thereof.

Among the dispersion medium mentioned above, examples of alcohols include methanol, ethanol, isopropanol, isobutanol, sec-butyl alcohol, tert-butyl alcohol, methyl cellosolve, ethylene glycol, glycerin, and the like. Examples of ethers include ethylene glycol dimethyl ether, 1,4-dioxane, tetrahydrofuran, and the like. Examples of ketone include acetone, methyl ethyl ketone, and the like.

When the composition contains a dispersion medium, the concentration of oxidized cellulose during stirring should be adjusted as appropriate according to the type of the stirring device or blending components, but in relation to the whole amount of targets to be stirred (in Production Method I, the target to be stirred refers to a mixture containing oxidized cellulose, at least one blending component, and a dispersion medium, and in Production Method II, the target to be stirred means a dispersion containing oxidized cellulose and a dispersion medium), the concentration is normally within the range of 0.01% by mass or more and 30% by mass or less, preferably within the range of over 1.0% by mass and 30% by mass or less, more preferably within the range of 1.5% by mass or more and 20% by mass or less, and further preferably within the range of 1.5% by mass or more and 15% by mass or less.

When a homomixer is used for stirring, the rotation number thereof may normally be within the range of 100 rpm to $1,000 \times 10^3$ rpm. From the point of view of more efficiently proceeding the size refinement, the rotation number is preferably within the range of 1,000 rpm to 100,000 rpm. Stirring time is not particularly limited and preferably within the range of 1 minute to 1 hour from the viewpoint of productivity. When a homomixer is used for stirring, the concentration of oxidized cellulose is within the range of 0.1% to 30% by mass in relation to the whole amount of the target to be stirred. The concentration of oxidized cellulose within the range of 0.1% to 30% by mass tends to allow for more progressive size refinement and more efficient production of nanocellulose-containing compositions. From a similar point of view, the concentration of oxidized cellulose is more preferably more than 1.0% by mass and 30% by mass or less, further preferably 1.5% by mass or more and 20% by mass or less, and still further preferably 1.5% by mass or more and 15% by mass or less.

A planetary centrifugal mixer is an apparatus that mixes materials in a container by causing the container into which the materials are charged to be rotated and revolved. A planetary centrifugal mixer allows for stirring without using a stirring blade. The orbital speed and rotation speed of a planetary centrifugal mixer during stirring can be set as appropriate and, for example, the orbital speed can be 400 to 3000 rpm, and the rotation speed can be 200 to 1500 rpm. When a planetary centrifugal mixer is used, the stirring is preferably performed at an orbital speed of 1200 to 2500 rpm and a rotation speed of 600 to 1000 rpm for 3 to 15 minutes from the viewpoint of ensuring quality uniformity while achieving mild stirring. The orbital speed is more preferably 1500 to 2300 rpm, and the rotation speed is more preferably 700 to 950 rpm. When the stirring is performed using a planetary centrifugal mixer, the concentration of oxidized cellulose is, for example, 0.01% to 1.0% by mass and preferably 0.1% to 0.5% by mass.

Examples of vibration-type stirrers include a vortex mixer (touch mixer). In a vortex mixer, stirring is performed by forming a vortex in a liquid material in a container. A vibration-type stirrer, such as a vortex mixer, allows for stirring without using a stirring blade and achieves milder stirring. Furthermore, a vibration-type stirrer, such as a vortex mixer, can achieve mild stirring with simple equipment and, therefore, is excellent in terms of production facilities and production costs. The rotation number of a vortex mixer is, for example, 600 to 3000 rpm, and stirring is preferably performed for 3 to 15 minutes. When the stirring is performed using a vortex mixer, the concentration of an oxidized cellulose water dispersion, which is used as a material, is, for example, 0.01% to 1.0% by mass and preferably 0.1% to 0.5% by mass.

<Oxidized Cellulose>

The step for preparing oxidized cellulose in the present invention is not particularly limited. Oxidized cellulose may be obtained and used as a ready-made product, such as a commercial product, or may be prepared by oxidizing cellulose raw materials with a hypochlorous acid or a salt thereof. For example, oxidized cellulose may be in the form of a solid (dried) form, a slurry form, or the like. Although not particularly limited, a slurry form is preferable. That is, oxidized cellulose is preferably prepared as slurry. The term "slurry" herein means suspension containing oxidized cellulose. The slurry may contain a solvent used when oxidized cellulose is prepared. Alternatively, the slurry may be prepared by adding the dispersion medium described above appropriately. Oxidized cellulose in a slurry form is easy to handle, and size refinement tends to proceed.

When the oxidized cellulose of the present invention is slurry, the amount of oxidized cellulose is normally within the range of 0.1% by mass or more and 95% by mass or less, preferably 1% by mass or more and 50% by mass or less, and more preferably 1% by mass or more and 30% by mass or less in relation to 100% by mass of the total amount of slurry.

The oxidized cellulose in the present invention includes fibrous cellulose obtained by oxidizing cellulose raw materials with a hypochlorous acid or a salt thereof. Oxidized cellulose is an oxide of a cellulose raw material and means oxidized cellulose before the fibrillation treatment (refinement treatment). The oxidized cellulose in the present invention is also called oxidized cellulose fiber. That is, the oxidized cellulose in the present invention includes an oxide of a cellulose raw material oxidized with a hypochlorous acid or a salt thereof. Incidentally, the main component of plants is cellulose, and bundles of cellulose molecules are called cellulose micron fibrils. Cellulose in a cellulose raw material is also included in the form of cellulose microfibrils.

(Degree of Polymerization)

In one embodiment of the present disclosure, the degree of polymerization of oxidized cellulose may be 600 or less. When the degree of polymerization of oxidized cellulose is 600 or less, a large amount of energy tends to be unnecessary for fibrillation, and it tends to be possible to develop sufficient ease-of-fibrillatability. This tends to enable size refinement under mild conditions, size refinement by normal stirring or kneading, and efficient production of a nanocellulose-containing composition. From the viewpoint of ease-of-fibrillatability, the lower limit of the degree of polymerization of this oxidized cellulose is not particularly set. When the degree of polymerization of oxidized cellulose is 30 or more, the proportion of particulate cellulose may be smaller than fibrous cellulose, slurry containing oxidized cellulose may show uniform quality and stable viscosity, and a thixotropic property, which is a characteristic of nanocellulose, is likely to be obtained. From the above point of view, the degree of polymerization of oxidized cellulose is preferably 30 to 600.

The degree of polymerization is more preferably 580 or less, further preferably 560 or less, still further preferably 550 or less, even preferably 500 or less, even more preferably 450 or less, and even further preferably 400 or less. The lower limit of the degree of polymerization is more preferably 50 or more, further preferably 60 or more, still further preferably 70 or more, even preferably 80 or more, even more preferably 90 or more, even further preferably 100 or more, particularly preferably 110 or more, and most preferably 120 or more from the viewpoint of making the viscosity stability of slurry good. The preferred range of the degree of polymerization may be determined by combining the upper limit and the lower limit as described previously as appropriate. The degree of polymerization of oxidized cellulose is more preferably 50 to 600, further preferably 60 to 600, still further preferably 80 to 600, even preferably 80 to 550, even more preferably 80 to 500, even further preferably 80 to 450, and particularly preferably 80 to 400.

The degree of polymerization of oxidized cellulose may be adjusted by changing the reaction time, reaction temperature, pH, available chlorine concentration of a hypochlorous acid or a salt thereof, or the like, during the oxidation reaction. Specifically, since there is a tendency that the higher the degree of oxidation, the lower the degree of polymerization, a method for extending the reaction time and/or heightening the reaction temperature of oxidation can be mentioned, for example, in order to reduce the degree of polymerization. As another method, the degree of polymerization of oxidized cellulose can be adjusted by the stirring condition of the reaction system at oxidation reaction. For example, an oxidation reaction tends to proceed smoothly and the degree of polymerization tends to decrease under a condition where the reaction system is sufficiently uniform using a stirring blade or the like. Meanwhile, a reaction is likely to be uneven and the degree of polymerization of oxidized cellulose is difficult to reduce sufficiently under a condition where the stirring of the reaction system is likely to be uneven, such as stirring with a stirrer. The degree of polymerization of oxidized cellulose also tends to vary depending on the selection of the cellulose raw material. Accordingly, the degree of polymerization of oxidized cellulose can be adjusted depending on the selection of cellulose raw materials. In the present description, the degree of polymerization of oxidized cellulose is an average degree of polymerization (viscosity average degree of polymerization) measured by a viscosity method. Details follow the method described in the Examples below.

(Carboxy Group Content)

The carboxy group content of oxidized cellulose is preferably 0.30 to 2.0 mmol/g. When the carboxy group content is 0.30 mmol/g or more, sufficient ease-of-fibrillatability can be imparted to oxidized cellulose. This tends to enable size refinement under mild conditions and enable refinement by normal stirring or kneading. Meanwhile, when the carboxy group content is 2.0 mmol/g or less, excess decomposition of oxidized cellulose when blended with other components can be suppressed, and nanocellulose with a small ratio of particulate cellulose and uniform quality can be obtained. From such a viewpoint, the carboxy group content of oxidized cellulose is more preferably 0.35 mmol/g or more, further preferably 0.40 mmol/g or more, still further preferably 0.42 mmol/g or more, further more preferably 0.50 mmol/g or more, even preferably over 0.50 mmol/g, even more preferably 0.55 mmol/g or more, and even further preferably 0.60 mmol/g. The upper limit of the carboxy group content is more preferably 1.5 mmol/g or less, further preferably 1.2 mmol/g, still further preferably 1.0 mmol/g or less, further more preferably 0.9 mmol/g, and even preferably 0.80 mmol/g or less. The preferred range of the carboxy group content may be determined by combining the upper and lower limits as described previously as appropriate. The carboxy group content of the oxidized cellulose is more preferably 0.35 to 2.0 mmol/g, further preferably 0.35 to 1.5 mmol/g, still further preferably 0.40 to 1.5 mmol/g, further more preferably 0.50 to 1.2 mmol/g, even preferably over 0.50 to 1.2 mmol/g, even more preferably 0.55 to 1.0 mmol/g, and even further preferably 0.60 to 0.80 mmol/g.

The carboxy group content in oxidized cellulose (mmol/g) is a value calculated using the following formula from the sodium hydroxide amount (a), which is an amount consumed in the neutralization stage of a weak acid that shows a mild change in conductivity in the measurement performed by adding 0.1 M (hereinafter also written as mol/L) aqueous hydrochloric acid solution to an aqueous solution containing oxidized cellulose and water so as to adjust the pH of the solution to 2.5, then adding a 0.05 N aqueous sodium hydroxide solution dropwise thereto, and measuring the electrical conductivity up to the pH of 11.0. The carboxy group content of oxidized cellulose may be adjusted by changing the reaction time, the reaction temperature, the pH of the reaction liquid of oxidation reaction, or the like.

$$\text{Carboxy group content} = a \, (ml) \times 0.05/\text{mass of oxidized cellulose (g)}$$

Specifically, the carboxy group content can be measured in accordance with the method described in the Examples below.

Furthermore, in one mode of oxidized cellulose used in the invention, the light transmittance of a nanocellulose water dispersion is 60% or more, where the nanocellulose water dispersion is obtained by the fibrillation treatment of a water dispersion of the oxidized cellulose with a concentration of a 0.1% by mass with a planetary centrifugal mixer in a condition of the orbital speed of 2000 rpm and the rotation speed of 800 rpm for 10 minutes. The light transmittance of this nanocellulose water dispersion is preferably 70% or more, more preferably 75% or more, and more further preferably 80% or more. The light transmittance is a value at a wavelength of 660 nm by a spectrophotometer. Specifically, the light transmittance can be measured in accordance with the method described in the Examples below.

Furthermore, the oxidized cellulose used in the invention preferably shows a light transmittance of a nanocellulose water dispersion of 60% or more, where the nanocellulose water dispersion is obtained by the fibrillation treatment of a water dispersion of the oxidized cellulose with a concentration of a 0.1% by mass by a vortex mixer in a condition of the rotation number of 3000 rpm for 10 minutes. The light transmittance of this nanocellulose water dispersion is more preferably 70% or more, further preferably 75% or more, and still further preferably 80% or more.

Oxidized cellulose in the present invention is obtained by oxidation using a hypochlorous acid or a salt thereof. The thus-obtained oxidized cellulose preferably has a structure in which at least two hydroxy groups of a glucopyranose ring constituting cellulose are oxidized, and more specifically has a structure in which hydroxy groups at the 2- and 3-positions of a glucopyranose ring is oxidized, and carboxy groups are introduced. It is preferred that the hydroxy group at the 6-position of the glucopyranose ring of the nanocellulose or oxidized cellulose is not oxidized and remains as a hydroxy group. The position of the carboxy group in the glucopyranose ring of oxidized cellulose can be analyzed by comparing a solution NMR spectrum using rayon oxide as a model molecule with a solid $^{13}$C-NMR spectrum of oxidized cellulose.

Rayon has the same chemical structure as cellulose, and the oxide of rayon (oxidized rayon) is soluble in water. Carbon peaks attributed to the carboxy group are observed at 165 to 185 ppm by dissolving rayon oxide in heavy water and performing a one-dimensional solution $^{13}$C-NMR measurement. In one mode of the oxidized cellulose or nanocellulose obtained by oxidizing a cellulose raw material with a hypochlorous acid or a salt thereof, which is used in the present invention, two signals appear in this chemical shift range. Furthermore, a two-dimensional solution NMR measurement can determine that carboxy groups are introduced into the 2- and 3-positions.

In a solid $^{13}$C-NMR of oxidized cellulose or nanocellulose obtained by oxidizing a cellulose raw material with a hypochlorous acid or a salt thereof, two signals appear within 165 to 185 ppm when the introduction amount of carboxy groups is large, and a very broad signal appears when the introduction amount of carboxy groups is small. The result of rayon oxide reveals that the signals of the carboxy group carbons introduced into the 2- and 3-positions are close together, and the separation of two signals is insufficient in a solid $^{13}$C-NMR with low resolution. Accordingly, a broad signal is observed when the introduction amount of carboxy groups is small. That is, in a solid $^{13}$C-NMR spectrum, it can be confirmed that carboxy groups are introduced into the 2- and 3-positions by evaluating the broadening of the peak that appears within the range of 165 to 185 ppm.

If the ratio of the two peak area values (large area value/small area value), which is determined by drawing a baseline for the peak within the range of 165 ppm to 185 ppm in the solid-state $^{13}$C-NMR spectrum, calculating the overall area value, and vertically dividing the area value at the peak top into the two peak area, is 1.2 or more, the peak is considered broad.

The presence or absence of the broad peak can be determined based on the ratio between the length L of the baseline within the range of 165 ppm to 185 ppm and the length L' of the vertical line from the peak top to the baseline. That is, if the ratio L'/L is 0.1 or more, a broad peak can be judged to exist. The ratio L'/L may be 0.2 or more, may be 0.3 or more, may be 0.4 or more, and may be 0.5 or more. The upper limit of the ratio L'/L is not particularly limited and should be normally 3.0 or less, or may be 2.0 or less, or 1.0 or less.

The structure of the glucopyranose ring may also be determined by analyzing the structure in accordance with the method disclosed in Sustainable Chem. Eng. 2020, 8, 48, 17800 to 17806.

When nanocellulose or oxidized cellulose used in the present invention contains a carboxy group, forms of salt types, proton types, and modified types with modified groups are encompassed. The modified group is not particularly limited as long as the group is derived from compounds capable of forming ion bonds or covalent bonds with a carboxy group or a hydroxy group of nanocellulose or oxidized cellulose. The properties of nanocellulose or oxidized cellulose can be adjusted by adjusting the carboxy group form. Examples of compounds with a modified group capable of forming an ion bond include primary amines, secondary amines, tertiary amines, quaternary ammonium compounds, and phosphonium compounds. Examples of compounds with a modified group capable of forming a covalent bond include alcohols, isocyanate compounds, and epoxy compounds.

Oxidized cellulose in the present invention is prepared without the need for using an N-oxyl compound, such as TEMPO. N-oxyl compounds have raised concerns about their impact on the environment and human health. Thus, oxidized cellulose and nanocellulose in the present invention are preferably substantially free of a N-oxyl compound. Here, in the present description, the expression that oxidized cellulose or nanocellulose "is substantially free of a N-oxyl compound" means that no N-oxyl compound is used upon oxidation, or the nitrogen content derived from N-oxyl compound in oxidized cellulose or nanocellulose is 2.0 ppm by mass or less, preferably 1.0 ppm by mass or less in terms of the increase from a cellulose raw material. In addition, a case where the N-oxyl compound content is preferably 2.0 ppm by mass or less, more preferably 1.0 ppm by mass or less as the increase from a cellulose raw material is also encompassed in the meaning of "substantially free of a N-oxyl compound".

The residual nitrogen component may be measured using a total trace nitrogen analyzer and, more specifically, measured by the method disclosed in the Examples.

(Production Method of Oxidized Cellulose)

Next, a production method of oxidized cellulose is described. Oxidized cellulose can be produced by oxidizing a cellulose raw material with a hypochlorous acid or a salt thereof.

A cellulose raw material is not particularly limited as long as it mainly contains cellulose. Examples thereof include pulp, natural cellulose, regenerated cellulose, fine cellulose depolymerized by mechanically processing cellulose, and the like. As a cellulose raw material, commercially available products, such as crystalline cellulose made from pulp, can be used as is. Other unused biomass containing large amounts of cellulose components, such as soy pulp or soybean hull, may be used as a raw material. Alternatively, a cellulose raw material may be treated with an alkali at an appropriate concentration in advance to facilitate the penetration of an oxidizing agent used into raw material pulp.

In the production method of the present invention, fine cellulose obtained by processing cellulose mechanically or chemically is preferably used as a cellulose raw material. Suitable examples of fine cellulose include powder pulp. Using powdered pulp tends to result in the further progress of size refinement and efficient production of nanocellulose. The particle diameter of powder pulp is normally within the range of 1 to 1000 $\mu$m, preferably within the range of 1 to 500 $\mu$m, and more preferably within the range of 1 to 100 $\mu$m. The particle diameter herein means an average particle diameter when the volume accumulation distribution reaches 50% when the particle size distribution is expressed as a volume accumulation distribution, measured using the laser scattering method as the measurement principle.

Examples of hypochlorous acid or a salt thereof used to oxidize a cellulose raw material include a hypochlorous acid water, sodium hypochlorite, potassium hypochlorite, calcium hypochlorite, ammonium hypochlorite, and the like. Among them, sodium hypochlorite is preferred in view of the ease of handling.

Examples of methods for producing oxidized cellulose by oxidizing a cellulose raw material include a method including a step of mixing a cellulose raw material with a reaction solution containing a hypochlorous acid or a salt thereof. Water is preferred as the solvent in the reaction solution because it is easy to handle and less likely to cause side reactions.

In oxidation, it is preferred to use a hypochlorous acid or a salt thereof with an available chlorine concentration of 6% by mass or more and 43% by mass or less. Using a hypochlorous acid or a salt thereof with an available chlorine concentration of 6% by mass or more and 43% by mass or less can sufficiently increase the carboxy group content in oxidized cellulose, sufficiently promote the size refinement, and omit the mechanical fibrillation treatment after the oxidation reaction.

It is also preferred that the available chlorine concentration of a hypochlorous acid or a salt thereof in the reaction liquid (reaction system) is within the range of 6 to 43% by mass.

From the viewpoint of more smoothly proceeding the size refinement of oxidized cellulose, the available chlorine concentration is more preferably 7% by mass or more, further preferably 10% by mass or more, still further preferably 14% by mass or more, further more preferably 15% by mass or more, even preferably 18% by mass or more, and even more preferably 20% by mass or more. From the viewpoint of suppressing excess decomposition of cellulose, the available chlorine concentration of the reaction liquid is more preferably 40% by mass or less and further preferably 38% by mass or less. The range of the available chlorine concentration of the reaction liquid may be determined by combining the upper and lower limits as described previously as appropriate. The range of the available chlorine concentration is more preferably within the range of 7% to 43% by mass and further preferably within the range of 14% to 43% by mass.

The available chlorine concentration of a hypochlorous acid or a salt thereof is defined as follows. A hypochlorous acid is a weak acid existing as an aqueous solution, and a hypochlorous acid salt is a compound in which a hydrogen of a hypochlorous acid is replaced with another cation. For example, sodium hypochlorite, which is a hypochlorous acid salt, exists in a solvent (preferably in an aqueous solution). Thus, the concentration is measured as an available chlorine amount in a solution, not as a concentration of sodium hypochlorite. Here, regarding the available chlorine in sodium hypochlorite, the bound chlorine atom of sodium hypochlorite (NaClO) has the same oxidizability as two non-bound chlorine atoms ($Cl_2$) because the oxidizability of a bivalent oxygen atom generated by the decomposition of sodium hypochlorite corresponds to two atom equivalents of monovalent chlorine and therefore, available chlorine = 2 × (chlorine in NaClO). The specific procedure of the measurement is as follows: the sample is precisely weighed; water, potassium iodide, and acetic acid are added and left to stand; the free iodine is titrated with a sodium thiosulfate solution using a starch solution as the indicator to determine the available chlorine concentration.

The oxidation reaction of a cellulose raw material with a hypochlorous acid or a salt thereof is preferably performed while adjusting the pH to be within the range of 5.0 or more. This range results in a tendency that the oxidation reaction of a cellulose raw material can be sufficiently promoted, the carboxy group content in oxidized cellulose can be sufficiently increased, and size refinement by stirring proceeds easily. The pH of the reaction system is more preferably 7.0 or more and further preferably 8.0 or more. The upper limit of the pH of the reaction system is not particularly limited and is preferably 14.5 or less, more preferably 14.0 or less, and further preferably 13.0 or less. The range of the pH of the reaction system is more preferably 7.0 to 14.0, and further preferably 8.0 to 13.5.

As an example, the method of producing oxidized cellulose is further described below, referring to a case where sodium hypochlorite is used as a hypochlorous acid or a salt thereof.

When a cellulose raw material is oxidized using sodium hypochlorite, a reaction liquid is preferably an aqueous sodium hypochlorite solution. Examples of methods for adjusting the available chlorine concentration of an aqueous sodium hypochlorite solution to a target concentration (for example, the target concentration is 6% by mass to 43% by mass) include a method for concentrating an aqueous sodium hypochlorite solution with a lower available chlorine concentration than the target concentration; a method for diluting an aqueous sodium hypochlorite solution with a higher available chlorine concentration than the target concentration; a method for dissolving a crystal of sodium hypochlorite (for example, sodium hypochlorite pentahydrate) in a solvent; and the like. Among these, adjusting the concentration to the available chlorine concentration as an oxidizing agent by a method for diluting an aqueous sodium hypochlorite solution or a method for dissolving a crystal of sodium hypochlorite in a solvent is preferable because of less self-decomposition (that is, the decrease of the available chlorine concentration is low) and simple and convenient adjustability of available chlorine concentration.

The method for mixing a cellulose raw material and an aqueous sodium hypochlorite solution is not particularly limited, but it is preferred to add a cellulose raw material to an aqueous sodium hypochlorite solution and mix the mixture.

In order to efficiently promote the oxidation reaction of a cellulose raw material, it is preferred to perform an oxidation reaction while stirring the mixture of a cellulose raw material and an aqueous sodium hypochlorite solution. Examples of stirring methods include stirring with a magnetic stirrer, a stirring rod, a stirring blade-attached stirrer (three-one motor), a homomixer, a disper mixer, a homogenizer, an exterior circulation stirring, and the like. Among these, a method using one or two or more of a share stirrer, such as a homomixer and a homogenizer, a stirring blade-attached stirrer, and a disper mixer, is preferred, and a method using a stirring blade-attached stirrer is particularly preferred because the oxidation reaction of a cellulose raw material proceeds smoothly and the degree of polymerization of oxidized cellulose is easy to be adjusted to a given value or lower. When a stirring blade-attached stirrer is used, a device with a known stirring blade, such as a propeller blade, a paddle blade, and a turbine blade, can be used as a stirrer. When a stirring blade-attached stirrer is used, it is preferred to perform stirring at a rotation speed of 50 to 300 rpm.

The reaction temperature in the oxidation reaction is preferably 15°C to 100°C and more preferably 20°C to 90°C. The pH of the reaction system decreases during the reaction as carboxy groups are formed in the cellulose raw materials due to the oxidation reaction. Thus, from the viewpoint of efficiently promoting oxidation reaction, it is preferred to perform an oxidation reaction while adding an alkali agent (for example, sodium hydroxide or the like) or an acid (for example, hydrochloric acid or the like) to a reaction system and adjusting the pH of the reaction system. The oxidation reaction time can be set according to the degree of the progress of oxidation and is preferably about 15 minutes to 50 hours. When the pH of the reaction system is set to 10 or more, it is preferred to set the reaction temperature to 30°C or higher and/or the reaction time to 30 minutes or longer.

The concentration of the cellulose raw material at the oxidation reaction is preferably 30% by mass or less, more preferably 20% by mass or less, and further preferably 10% by mass or less in relation to the total amount of the reaction mixture at the oxidation reaction from the viewpoint of improving workability, such as facilitating stirring during the oxidation reaction, and promoting size refinement. The lower limit of the concentration of a cellulose raw material at the oxidation reaction is normally 0.1% by mass or more, and from the viewpoint of productivity, it is preferably 1% by mass or more, more preferably 2% by mass or more, and further preferably 3% by mass or more. The concentration of a cellulose raw material at the oxidation reaction is preferably 0.1% by mass or more and 30% by mass or less, more preferably 1% by mass or more and 20% by mass or less, and further preferably 1% by mass or more and 10% by mass or less.

In the production of oxidized cellulose, a process for terminating an oxidation reaction may be performed after oxidizing a cellulose raw material. The process for terminating the oxidation reaction is not particularly limited. Examples thereof include a method of adding an acid and a metal catalyst. In addition, a method of reducing a hypochlorous acid or a salt thereof can be mentioned as a suitable example. Specific examples of processes for terminating the oxidation reaction include a method of adding a reducing agent, such as sodium sulfite. The amount of a reducing agent to be added should be adjusted, as appropriate, according to the amount of a hypochlorous acid or a salt thereof (available chlorine concentration).

Oxidized cellulose can be obtained as an oxide of a cellulose raw material oxidized with a hypochlorous acid or a salt thereof by known isolation processes, such as centrifugation and filtration, using a solution containing oxidized cellulose obtained by the reaction described above and optionally purifying the isolated material. Alternatively, a solution containing oxidized cellulose obtained by the reaction described above may be subjected to the subsequent step as it is.

<Blending Component>

The nanocellulose-containing composition of the present invention contains at least one blending component other than nanocellulose. The blending component in the present invention refers to any target material to be mixed or combined with nanocellulose. The blending component is any material, and may be an organic or inorganic matter or may be solid or liquid. The blending component may be selected as appropriate according to the applications of the nanocellulose-containing composition.

For example, nanocellulose is used in resins, fibers, rubbers, foods, cosmetics, medical supplies, coatings, inks, sheets and films, formed articles, inorganic materials, or the like, but the applications are not limited thereto. Accordingly, for example, the nanocellulose-containing composition may be a resin, a fiber, a rubber, a food, a cosmetic, a medical supply, a coating, an ink, a sheet or film, a formed article, or an inorganic material, or an intermediate during the production in these applications. That is, examples of use of the nanocellulose-containing composition include a resin, a fiber, a rubber, a food, a cosmetic, a medical supply, a coating, an ink, a sheet or film, a formed article, or an inorganic material containing the nanocellulose-containing composition, or a nanocellulose-containing composition for forming a resin, a fiber, a rubber, a food, a cosmetic, a medical supply, a coating, an ink, a sheet or film, a formed body, or an inorganic material. The blending component should be a component that can be included in these applications or an intermediate of these applications.

For example, nanocellulose may be incorporated in a resin or a rubber in order to improve the functionality, such as strength, of the resin or the rubber. Accordingly, for example, the production method of the present invention can be applied to the production of a resin or a rubber. For example, when the nanocellulose-containing composition is used for a resin or a rubber, the blending component may be a resin or a rubber itself or a raw material monomer of this resin or rubber.

The resin to which the production method of the present invention can be applied is not particularly limited, and, for example, polymers of ethylenically unsaturated monomers and the like can be mentioned. At this time, a polymer of an ethylenically unsaturated monomer may be used, or an ethylenically unsaturated monomer may be used as a blending component.

Specific examples of ethylenically unsaturated monomers include (meth)acrylic acid, alkyl (meth)acrylates, alkylene glycol (meth)acrylates, (meth)acrylonitrile, halogenated vinyls, maleic imides, phenylmaleimide, (meth)acrylic amide, styrene, $\alpha$-methylstyrene, vinyl acetate, and the like. Examples of alkyl (meth)acrylates include those with a C1-10 alkyl moiety. The alkyl moiety may be any of linear, branched, or cyclic and may be unsubstituted or substituted.

The ethylenically unsaturated monomer may have a functional group such as a carboxy group, a hydroxy group, an epoxy group, an amino group, an amide group, or a cyano group. These functional groups can increase the affinity to nanocellulose. Meanwhile, from the viewpoint of avoiding polymerization instability due to emulsification and dispersion difficulties, the proportion of the ethylenically unsaturated monomer with these functional groups is preferably 5 mol% or less, more preferably 3 mol% or less, and further preferably 1 mol% or less of the total ethylenically unsaturated monomers.

The weight average molecular weight of the polymer of the ethylenically unsaturated monomer is not particularly limited. For example, the weight average molecular weight may be 5,000 to 3,000,000. When the weight average molecular weight of the particle polymer is 5000 or more, reduction in resin strength is suppressed, and when the weight average molecular weight of the particle is 3,000,000 or less, there is a tendency that particles are likely to melt in a resin and sufficient reforming effect can be obtained.

Specifically, the weight average molecular weight (Mw) of a polymer of an ethylenically unsaturated monomer can be measured by the following method.

The weight average molecular weight of a polymer of an ethylenically unsaturated monomer is measured by GPC (gel permeation chromatography; for example, HLC-8220, manufactured by Tosoh Corporation). Specifically, an appropriate solvent is added to a resin modifier containing nanocellulose and a polymer of an ethylene unsaturated monomer to dissolve the polymer. After that, the solution is filtrated through a 0.45-$\mu$m filter, and the weight average molecular weight of the obtained liquid is measured in terms of polystyrene.

The nanocellulose in the present invention has a carboxy group. At least some of the carboxy groups in nanocellulose in the nanocellulose-containing composition may be modified. Thus, the blending component may be a compound that modifies a carboxy group. Examples of the compound include an amine, quaternary ammonium, and the like. When the nanocellulose-containing composition is in the form of a resin, it is thought that nanocellulose is modified by the reaction of an amine or a quaternary ammonium salt compound with a carboxy group on the surface of nanocellulose, the hydrophobicity of nanocellulose is improved, and the affinity to a monomer or a resin is improved.

The amine that modifies nanocellulose is not particularly limited and may be a primary, secondary, or tertiary amine. The carbon number of a hydrocarbon group or an aromatic group bonded to a nitrogen atom of an amine or a quaternary ammonium salt compound (when two or more hydrocarbon groups or aromatic groups are bonded to a nitrogen atom, the total carbon number thereof) is not particularly limited and may be selected out of the carbon number of 1 to 100. As the amine, those having a polyalkylene oxide structure, such as ethylene oxide/propylene oxide (EO/PO) copolymer parts, may be used. From the viewpoint of imparting sufficient hydrophobicity to nanocellulose, the carbon number is preferably 3 or more and more preferably 5 or more.

The quaternary ammonium salt compound that modifies nanocellulose is not particularly limited. Specific conceivable examples of quaternary ammonium salt compounds include quaternary ammonium hydroxides such as tetrabutylammonium hydroxide, quaternary ammonium chlorides such as tetrabutylammonium chloride, quaternary ammonium bromides such as tetrabutylammonium bromide, quaternary ammonium iodides such as tetrabutylammonium iodide, and the like.

The amine or quaternary ammonium can be a blending component, but the timing to add the amine or quaternary ammonium in the production method of the present invention is not particularly limited. In Production Method I, a mixture of oxidized cellulose and at least one blending component may contain an amine or quaternary ammonium (that is, a mode in which the blending component is an amine or quaternary ammonium), or an amine or quaternary ammonium may be added after stirring the mixture. In Production Method II, oxidized cellulose is stirred, and consecutively an amine or quaternary ammonium may be added as at least one blending component.

For example, nanocellulose may be used for dispersing components that can be contained in the applications described above in some cases. Suitable examples of such components include inorganic particles. Inorganic particles may be fine inorganic particles. Inorganic particles may be used in combination with nanocellulose, regardless of the uses described above.

Inorganic particles that can be used in combination with nanocellulose are not particularly limited, and, for example, elemental metals of metals such as copper, silver, nickel, palladium, carbon, silicon, aluminum, zinc, or platinum, and a metal compound containing at least one of such metals can be mentioned. The metal compound may be an oxide, a chloride, a halide (a bromide, a fluoride, or the like), an inorganic acid salt (a nitrate, a sulfate, a hydrochloride, a phosphate, a phosphite, or the like), or an organic acid salt (a carboxylate such as a formate or an acetate or an oxycarboxylate such as a lactate or a malate). Examples of metal compounds include alumina, zirconia, titanium oxide, barium titanate, alumina nitride, silicon nitride, boron nitride, silicate glass, lead glass, inorganic glass, ruthenium oxide, yttrium oxide, cerium oxide, aluminum silicate, zinc oxide, copper silicate, and the like. Compounds containing carbon encompass carbon black, carbon nanotubes, and the like.

Other examples of inorganic particles include copper oxide (CuO), iron oxide ($Fe_2O_3$), cobalt oxide ($Co_2O_3$), zinc oxide (ZnO), cerium oxide ($CeO_2$), lithium oxide ($Li_2O$), sodium oxide ($Na_2O$), potassium oxide ($K_2O$), magnesium oxide (MgO), calcium oxide (CaO), strontium oxide (SrO), barium oxide (BaO), yttrium oxide ($Y_2O_3$), manganese oxide ($Mn_2O_3$), indium oxide ($In_2O_3$), tin oxide ($SnO_2$), alumina ($Al_2O_3$), lanthanum oxide ($La_2O_3$), praseodymium oxide ($Pr_2O_3$), neodymium oxide ($Nd_2O_3$), samarium oxide ($Sm_2O_3$), europium oxide ($Eu_2O_3$), gadolinium oxide ($Gd_2O_3$), terbium oxide ($Tb_2O_3$), and dysprosium oxide ($Dy_2O_3$), silicon carbide (SiC), lime, calcium phosphate, hydroxyapatite (also referred to calcium hydroxyphosphate), tricalcium silicate ($3CaO \cdot SiO_2$) (also referred to as alite), dicalcium silicate ($2CaO \cdot SiO_2$) (also referred to as belite), calcium aluminate ($3CaO \cdot Al_2O_3$) (also referred to as aluminate), calcium aluminoferrite ($4CaO \cdot Al_2O_3 \cdot Fe_2O_3$) (also referred to as ferrite), calcium sulfate, and the like. Inorganic particles may be used singly or in a combination of two or more thereof.

The size of an inorganic particle is not particularly limited, and it is preferred that inorganic particles include particles with a particle diameter of 1 nm or more and 1000 $\mu$m or less. The median diameter of the inorganic particles is preferably 0.01 $\mu$m or more and 100 $\mu$m or less, more preferably 0.05 $\mu$m or more and 50 $\mu$m or less, and still more preferably 0.1 $\mu$m or more and 20 $\mu$m or less. The BET specific surface area of inorganic particles is preferably 10 $m^2$/g or more and 2000 $m^2$/g or less, more preferably 10 $m^2$/g or more and 1000 $m^2$/g or less, and further preferably 50 $m^2$/g or more and 1000 $m^2$/g or less. The median size and the BET specific surface area within the above range tend to further suppress the sedimentation of inorganic particles in a nanocellulose-containing composition. The median size can be measured by a laser diffraction particle size analyzer. The BET specific surface area can be measured by a surface area and pore size distribution analyzer.

The content of the blending components in the production method of the present invention is not particularly limited, and any content may be acceptable.

The total amount of oxidized cellulose and nanocellulose in the nanocellulose-containing composition is not particularly limited, and, for example, may be 0.1 to 90% by mass, 0.1 to 80% by mass, 0.1 to 70% by mass, 0.1 to 60% by mass, 0.1 to 50% by mass, 0.1 to 40% by mass, 0.1 to 30% by mass, 0.1 to 20% by mass, 0.1 to 10% by mass, 0.1 to 5% by mass, 0.1 to 1% by mass, 0.5 to 90% by mass, 1 to 90% by mass, 5 to 90% by mass, 10 to 90% by mass, 20 to 90% by mass, 30 to 90% by mass, 40 to 90% by mass, 50 to 90% by mass, 60 to 90% by mass, 70 to 90% by mass, 80 to 90% by mass, 40 to 60% by mass, 30 to 70% by mass, 20 to 80% by mass, or the like, based on the total mass of components constituting the nanocellulose-containing composition (provided that solvents and dispersion media are excluded when contained).

<Nanocellulose>

Nanocellulose in the present invention refers to a material derived from oxidized cellulose obtained by oxidizing a cellulose raw material using a hypochlorous acid or a salt thereof, in which the oxidized cellulose is fibrillated and the size is refined. Nanocellulose includes fine cellulose fibers.

The average fiber length of nanocellulose of the present invention is not particularly limited and preferably 50 nm or more and 800 nm or less. An average fiber length of 50 nm or more tends to make the quality as nanocellulose uniform. From the viewpoint of making the quality more uniform, the lower limit of the average fiber length is more preferably 100 nm or more, and further preferably 150 nm or more. An average fiber length of 800 nm or less tends to reduce the proportion of coarse cellulose fibers and suppress the occurrence of nanocellulose precipitation. From the viewpoint of suppressing the occurrence of precipitation, the upper limit of the average fiber length is more preferably 700 nm or less, further preferably 600 nm or less, still further preferably 500 nm or less, further more preferably 400 nm or less, and even preferably 300 nm or less.

From the viewpoint of improving nanocellulose quality, the average fiber length is more preferably 50 nm or more and 700 nm or less, further preferably 100 nm or more and 700 nm or less, still further preferably 100 nm or more and 600 nm or less, further more preferably 100 nm or more and 500 nm or less, still further preferably 100 nm or more and 400 nm or less, and even preferably 100 nm or more and 300 nm or less.

The average fiber width of the nanocellulose in the present invention is preferably 1 nm or more and 100 nm or less. An average fiber width of 1 nm or more tends to make the quality as nanocellulose uniform. From the viewpoint of making the quality more uniform, the lower limit of the average fiber width is more preferably 2 nm or more, and further preferably 3 nm or more. An average fiber width of 100 nm or less tends to reduce the proportion of coarse nanocellulose and suppress the occurrence of nanocellulose precipitation. From the viewpoint of suppressing the occurrence of precipitation more efficiently, the average fiber width is more preferably 50 nm or less, further preferably 30 nm or less, still further preferably 20 nm or less, and further more preferably 10 nm or less.

From the viewpoint of improving the quality of nanocellulose, the average fiber width is more preferably 2 nm or more and 50 nm or less, further preferably 3 nm or more and 30 nm or less, still further preferably 3 nm or more and 20 nm or less, and further more preferably 3 nm or more and 10 nm or less.

In the nanocellulose of the present invention, the aspect ratio represented by a ratio between the average fiber width and the average fiber length (average fiber length / average fiber width-) is preferably 20 or more and 200 or less.

An aspect ratio of 200 or less tends to ensure uniform dispersion of nanocellulose and enhance the quality. From such a viewpoint, the aspect ratio is more preferably 190 or less, and further preferably 180 or less.

In contrast, an aspect ratio of 20 or more tends to avoid the nanocellulose from becoming thick rod-like in shape and agglomerating due to uneven distribution and improve the quality of the nanocellulose. Therefore, the aspect ratio is more preferably 30 or more, and further preferably 40 or more.

The average fiber width and the average fiber length are determined by mixing nanocellulose and water so that the concentration of nanocellulose is approximately 1 to 10 ppm, allowing the sufficiently diluted cellulose water dispersion to air dry on a mica substrate, observing the shape of the nanocellulose using a scanning probe microscope, randomly selecting an arbitrary number of fibers from the obtained image, and calculating the average fiber width and the average fiber length from the cross-sectional height of the shape image = fiber width and perimeter length/2 = fiber length. Such an average fiber width and an average fiber length can be calculated using image processing software. At this time, the condition for image processing is arbitrary, but depending on the conditions, a difference may be caused in calculated values even for the same image. The range of difference in values depending on conditions is preferably within ±100 nm for the average fiber length. The range of difference in values depending on conditions is preferably within ±10 nm for the average fiber width. More specific measurement methods follow the method described in the Examples below.

When various properties of nanocellulose in the present invention are measured, a nanocellulose-containing composition may be used as a measurement sample, and nanocellulose after separating nanocellulose and other components (blending components) in a nanocellulose-containing composition may be used as a measurement sample.

In Production Method II, an object at the end of the stirring of oxidized cellulose (before adding at least one blending component) may be used as a measurement sample.

The average fiber width, average fiber length, and aspect ratio can be suitably controlled by oxidation using a hypochlorous acid or a salt thereof.

As one mode, nanocellulose in the present invention can be characterized by an average fiber width, an average fiber length, or an aspect ratio, as described above, and as another mode, nanocellulose may have a predetermined zeta potential or light transmittance.

(Zeta Potential)

In one embodiment of the present disclosure, nanocellulose in the present invention preferably has a zeta potential of -30 mV or less. A zeta potential of -30 mV or less (that is, an absolute value of 30 mV or more) ensures sufficient repulsion between microfibrils and nanocellulose with high surface electric charge density is likely to occur. This improves the dispersion stability of nanocellulose and provides excellent viscosity stability in the form of slurry and handling ability. From the viewpoint of dispersion stability, the lower limit of the zeta potential is not particularly limited. Meanwhile, when the zeta potential is -100 mV or more (that is, the absolute value is 100 mV or less), oxidative cleavage in the direction of the fibers as oxidation progresses tends to be suppressed, and thus nanocellulose of uniform size tends to be obtained.

For example, zeta potential tends to be higher when at least one of a reaction time, a reaction temperature, and a stirring condition of oxidation is set (for example, the reaction time is set to be longer) on the side that promotes oxidation (that is, on the side that increases the degree of oxidation). Furthermore, zeta potential can be suitably controlled by oxidation using a hypochlorous acid or a salt thereof.

From the above viewpoint, the zeta potential of nanocellulose in the present invention is more preferably -35 mV or less, further preferably -40 mV or less, and still further preferably -50 mV or less. The lower limit of the zeta potential is preferably -90 mV or more, more preferably -85 mV or more, further preferably -80 mV or more, and still further preferably -77 mV or more. The range of the zeta potential may be determined by combining the upper limit and the lower limit as described previously as appropriate.

The zeta potential is preferably -90 mV or more and -35 mV or less, more preferably -85 mV or more and -40 mV or less, and further preferably -80 mV or more and -50 mV or less. The zeta potential in the present description is a value of a cellulose water dispersion that is a mixture of nanocellulose and water with a nanocellulose concentration of 0.1% by mass measured at a pH of 8.0 and 20°C.

Specifically, the potential may be measured according to the following method.

Pure water is added to nanocellulose for dilution so that the nanocellulose concentration should be about 0.1%. To a nanocellulose dispersion in water after dilution, a 0.05-mol/L aqueous sodium oxide solution is added to adjust the pH to about 8.0, and a zeta potential is measured by, for example, a zeta potential meter (ELSZ-1000), manufactured by Otsuka Electronics Co., Ltd., at 20°C.

(Light Transmittance)

The nanocellulose dispersion of the present invention, in which nanocellulose is dispersed in a dispersion medium, shows less light scattering on cellulose fibers or the like, and high light transmittance. Specifically, in a suitable embodiment, nanocellulose in the present invention shows a light transmittance of 95% or more in the form of a liquid mixture in water with a solid content concentration of 0.1% by mass. The light transmittance is more preferably 96% or more, further preferably 97% or more, and still further preferably 99% or more. The light transmittance is a value at a wavelength of 660 nm by a spectrophotometer.

For example, the light transmittance can be measured by putting a nanocellulose water dispersion into a quartz cell with a thickness of 10 mm and measuring the light transmittance with a spectrophotometer (JASCO V-550).

Nanocellulose in the present invention is an aggregate of single unit fibers. When a carboxy group is introduced into nanocellulose in the present invention, it is sufficient to contain at least one carboxylated nanocellulose (also written as a carboxylated CNF), and it is preferred to contain carboxylated nanocellulose as a main component. Here, the expression "carboxylated CNF is a main component" means that the proportion of the carboxylated CNF is more than 50% by mass, preferably more than 70% by mass, more preferably more than 80% by mass of the total amount of fine cellulose. The upper limit of the proportion described above is 100% by mass, and may be 98% by mass or 95% by mass.

The fact that the nanocellulose-containing composition in the present invention contains nanocellulose can be confirmed by the presence of the physical properties of the nanocellulose-containing composition as one indicator. That is, the fact that the nanocellulose-containing composition in the present invention contains nanocellulose can be determined from the fact that the composition has a function occurred by nanocellulose, for example, the fact that nanocellulose-containing composition is in the form of slurry or a viscous form.

Specifically, when compared with a composition that does not contain nanocellulose, the composition obtained by the production method of the present invention can be determined to contain nanocellulose if it is in the slurry form, thickening has occurred, precipitation of the blending components has not occurred, or the like.

For example, when compared with a composition containing nanocellulose produced in accordance with WO 2018/230354, the composition obtained by the production method of the present invention can be determined to contain nanocellulose if it is in the slurry form or a viscous form similar to the above compositions.

The fact that the nanocellulose-containing composition obtained by the production method of the present invention contains nanocellulose can be judged whether or not the oxidized cellulose used is still coarse (whether original oxidized cellulose is maintained) by transmission phase contrast observation using an optical microscope.

A nanocellulose-containing composition obtained by the production method of the present invention can be applied to various applications. Specifically, for example, the nanocellulose-containing composition may be used as various materials (for example, resins, fibers, rubbers, and the like), and may be used in various applications (for example, foods, cosmetics, medical supplies, coatings, inks, and the like). Alternatively, a nanocellulose-containing composition may be formed into various sheets or films. The fields to which the nanocellulose-containing composition is applied are not particularly limited, and, for example, the composition may be used in the production of products in various fields such as automobile members, machine components, electric appliances, electronic appliances, cosmetics, medical supplies, building materials, daily necessities, and stationeries.

Examples

Although the present invention will be specifically described below with Examples, the present invention is not limited to these Examples.

[Measurement Method of Fiber Length and Fiber Width]

A composition obtained in any of Examples 1 to 12 and Comparative Examples 1 and 2 was diluted 1000 to 1000000-fold with pure water, then the diluted composition was allowed to air dry on mica substrates, and the shape of CNF was observed using a scanning probe microscope "MFP-3D infinity", manufactured by Oxford Asylum in an AC mode.

The fiber length was determined by binarizing and analyzing an obtained image using an image processing software, "Imaged". An average fiber length of 100 or more fibers was calculated from the formula: fiber length = "perimeter length"/2.

Regarding the fiber width, an average fiber width of 50 or more fibers was calculated using software attached to "MFP-3D infinity" as cross-sectional height of shape image = fiber width.

[Measurement of Viscosity Average Degree of Polymerization]

Oxidized cellulose was added to an aqueous sodium borohydride solution with a pH adjusted to 10 and reduced at 25°C for 5 hours. The amount of sodium borohydride was 0.1 g for 1 g of oxidized cellulose. After the reduction, solid-liquid separation by suction filtration and washing with water was performed, and the resulting oxidized cellulose was lyophilized. To 10 ml of pure water, 0.04 g of oxidized cellulose was added and stirred for 2 minutes, and 10 ml of 1 mol/L copper ethylene diamine solution was added to dissolve the oxidized cellulose. Thereafter, the flow times of a blank solution and a cellulose solution were measured at 25°C in a capillary viscometer. A relative viscosity ($\eta_r$), a specific viscosity ($\eta_{sp}$), and an intrinsic viscosity ($[\eta]$) were sequentially determined from the flow time (t0) of the blank solution, the flow time (t) of the cellulose solution, and the concentration (c [g/ml]) of oxidized cellulose, and the degree of polymerization (DP) of the oxidized cellulose was calculated from a formula of viscosity law.

$$\eta_r = \eta/\eta_0 = t/t0$$

$$\eta_{sp} = \eta_r - 1$$

$$[\eta] = \eta_{sp}/(100 \times c(1 + 0.28\eta_{sp}))$$

$$DP = 175 \times [\eta]$$

(Measurement of Carboxy Group Content)

To 60 ml of an oxidized cellulose water dispersion with an oxidized cellulose concentration adjusted to 0.5% by mass, a 0.1 mol/L aqueous hydrochloric acid solution was added to adjust the pH to 2.5, then a 0.05 N aqueous sodium hydroxide solution was added dropwise thereto, and the electrical conductivity up to the pH of 11.0 was measured. The carboxy group content (mmol/g) was calculated using the following formula from the sodium hydroxide amount (a), which was an amount consumed in the neutralization stage of a weak acid that showed a mild change in conductivity.

$$\text{Carboxy group content} = a \ (ml) \times 0.05/\text{mass of oxidized cellulose } (g)$$

[Production Example 1] Preparation of oxidized cellulose

In a beaker, 350 g of sodium hypochlorite pentahydrate crystal with an available chlorine concentration of 42% by mass was put, pure water was added, and the mixture was stirred to adjust the available chlorine concentration to 21% by mass. To the resulting mixture, 35% by mass hydrochloric acid was added and stirred to obtain an aqueous sodium hypochlorite solution with a pH of 11.

The aqueous sodium hypochlorite solution was warmed to 30°C in a constant temperature water bath while being stirred at 200 rpm using a propeller-type stirring blade in a stirrer (a three-one motor, BL600), manufactured by Shinto Scientific Co., Ltd., and 50 g of powder pulp (VP-1), manufactured by TDI Corporation, was added as a cellulose raw material.

After supplying the cellulose raw material, while keeping the temperature of the reaction mixture at 30°C in the same constant temperature water bath, 48% by mass of sodium hydroxide was added to adjust the pH of the reaction system to 11, and the stirring was continued for 2 hours in the same condition.

After the end of the reaction, centrifugation (1000 G, 10 minutes), decantation, and addition of pure water in an amount corresponding to the removed liquid were repeated to recover oxidized cellulose.

A measurement of nitrogen components derived from N-oxyl compounds in oxidized cellulose as a nitrogen amount using a total trace nitrogen analyzer (product name: TN-2100H, manufactured by Mitsubishi Chemical Analytech Co., Ltd.) and a calculation of the increase from the raw material pulp revealed that the nitrogen amount was 1.0 ppm by mass or less.

Then, an oxidized cellulose water dispersion with a concentration of 0.1% was prepared using the resulting oxidized cellulose. This oxidized cellulose water dispersion was processed by a stirrer, the resulting nanocellulose water dispersion was put in a quartz cell with a thickness of 10 mm, and the light transmittance at a wavelength of 660 nm was measured by a spectrophotometer (JASCO V-550). A planetary centrifugal mixer, "THINKY MIXER ARE-310", manufactured by Thinky Corporation, was used as a stirrer, and a process was performed for 10 minutes in a mix mode at an orbital speed of 2000 rpm and a rotation speed of 800 rpm. The evaluation criteria are as follows.

A: Light transmittance was 80% or higher

B: Light transmittance was 70% or higher and lower than 80%

C: Light transmittance is 60% or higher and lower than 70%

D: Light transmittance is lower than 60%

The available chlorine concentration in an aqueous sodium hypochlorite solution was measured by the following method.

(Measurement of available chlorine concentration in Aqueous Sodium Hypochlorite Solution)

An aqueous solution of sodium hypochlorite pentahydrate crystal in pure water, 0.582 g, was precisely weighed, then 50 mL of pure water was added, 2 g of potassium iodide and 10 mL of acetic acid were added, and the mixture was sealed immediately and stood in the dark for 15 minutes. After standing for 15 minutes, titration of free iodine with 0.1 mol/L sodium thiosulfate solution (solution factor: 1.000) (indicator: a starch test solution) found that the titration amount was 34.55 mL. A blank test was performed separately, and a correction was performed. Since 1 mL of a 0.1 mol/L sodium thiosulfate solution corresponded to 3.545 mgCl, the available chlorine concentration in the aqueous sodium hypochlorite solution was 21% by mass.

[Production Example 2]

Oxidized cellulose was obtained in the same manner as Production Example 1, except that the reaction time was set to 4 hours.

[Production Example 3]

Oxidized cellulose was obtained in the same manner as Production Example 1, except that the reaction time was set to 1.5 hours.

[Production Example 4]

Oxidized cellulose was obtained in the same manner as Production Example 1, except that KC FLOCK W-100GK, manufactured by Nippon Paper Industries Co., Ltd., was used as a raw material and the reaction time was set to 4 hours.

[Production Example 5]

Oxidized cellulose was obtained in the same manner as Production Example 4, except that the reaction time was set to 3 hours.

[Production Example 6]

Oxidized cellulose was obtained in the same manner as Production Example 4, except that the reaction time was set to 1 hour.

Oxidized cellulose obtained in Production Examples 1 to 6 was lyophilized, and a solid $^{13}$C-NMR of a sample stood for 24 hours or longer at 23°C and 50% RH was measured. The measurement revealed that all samples had a structure in which hydroxy groups at the 2- and 3-positions of a glucopyranose ring were oxidized and carboxy groups were introduced. The measurement condition of solid $^{13}$C-NMR was listed as follows.

(1) Sample tube: zirconia tube (4 mm$\varphi$)

(2) Magnetic field strength: 9.4 T (1H resonance frequency: 400 MHz)

(3) MAS rotation number: 15 kHz

(4) Pulse sequence: CPMAS method

(5) Contact time: 3 ms

(6) Waiting time: 5 seconds

(7) Cumulative number: 10000 to 15000 times

(8) Measurement device: JNM ECA-400 (manufactured by JEOL Ltd.)

It has also confirmed from the results of the measurement of a two-dimensional NMR using a model molecule of the oxidized cellulose as a sample that oxidized cellulose obtained by Production Examples 1 to 6 had a structure in which hydroxy groups at the 2- and 3-positions of a glucopyranose ring were oxidized and carboxy groups were introduced.

Furthermore, since no spectrum data change was observed at the 6-position between the solid $^{13}$C-NMR of the cellulose raw material and the solid $^{13}$C-NMR of the oxidized cellulose, it was judged that the hydroxy group at 6-position was not oxidized and remained as a hydroxy group in the oxidized cellulose.

Table 1 shows the degrees of polymerization, acid values (carboxy group content), and light transmittances of the oxidized celluloses obtained in Production Examples 1 to 6.

[Table 1]

| Production Example | Degree of polymerization | Acid value (mmol/g) | Light transmittance |
|---|---|---|---|
| 1 | 100 | 0.67 | A |
| 2 | 90 | 0.75 | A |
| 3 | 130 | 0.59 | B |
| 4 | 95 | 0.75 | A |
| 5 | 105 | 0.72 | A |
| 6 | 130 | 0.59 | B |

[Examples 1] Production of Nanocellulose-containing Composition

To a mixture of zinc oxide (manufactured by FUJIFILM Wako Pure Chemical Corporation, average particle diameter: 20 nm) and oxidized cellulose of Production Example 1, pure water was added to adjust the concentrations so that the zinc oxide concentration should be 10% by mass and the oxidized cellulose concentration should be 5% by mass to obtain a mixture. The resulting mixture was stirred for 10 minutes at 10,000 rpm by a homomixer to perform a dispersion process.

An analysis of the mixture subjected to a dispersion process by the [Measurement Method of Fiber Length and Fiber Width] found a CNF with an average fiber length of 196 nm and an average fiber width of 3.7 nm. That is, it was confirmed that nanocellulose-containing composition was obtained. It should be noted that, although particulate materials (average height: 10 nm to 30 nm), not fibrous materials, were observed in this analysis, the particulate materials were presumed as zinc oxide nanoparticles, or fragments or agglomerates thereof from the shape, and thus excluded from the shape measurement of CNF.

Furthermore, the mixture subjected to a dispersion process was thickened, and no precipitation of zinc oxide was observed even after standing for 2 days at 23°C. The occurrence of thickening and no precipitation observed was due to the exhibition of the function of nanocellulose, and it was confirmed that a nanocellulose-containing composition was obtained.

[Examples 2 to 6]

Nanocellulose-containing compositions were obtained in the same manner as Example 1, except that oxidized celluloses of Production Examples 2 to 6 were used.

Table 2 shows the evaluation result of the nanocellulose-containing compositions of Examples 1 to 6.

The item "Thickening" in tables relates to a mixture, and "A" indicates that the mixture was thickened, "B" indicates that thickening was observed, but a part of the mixture was separated, and "C" indicates that no thickening was observed.

The item "Precipitation" in tables relates to zinc oxide, and "A" indicates that zinc oxide was not precipitated, "B" indicates that most of the zinc oxide was not precipitated, but a small amount of precipitation of zinc oxide was observed, and "C" indicates that zinc oxide was precipitated.

[Table 2]

| Examples | Oxidized cellulose | Average fiber length (nm) | Average fiber width (nm) | Thickening | Precipitation |
|---|---|---|---|---|---|
| 1 | Production Example 1 | 196 | 3.7 | A | A |
| 2 | Production Example 2 | 170 | 3.5 | A | A |
| 3 | Production Example 3 | 220 | 4.2 | B | B |
| 4 | Production Example 4 | 210 | 3.8 | A | A |
| 5 | Production Example 5 | 220 | 4.0 | A | A |
| 6 | Production Example 6 | 240 | 4.3 | B | B |

[Example 7] Production of Nanocellulose-Containing Composition

The oxidized cellulose of Production Example 1 was fibrillated in a homomixer under a dispersion condition at 10,000 rpm for 10 minutes to obtain a nanocellulose water dispersion (concentration: 1.0% by mass). An analysis of the water dispersion found nanocellulose with an average fiber length of 165 nm and an average fiber width of 4.2 nm. Subsequently, the resulting CNF water dispersion was appropriately concentrated by an evaporator, and pure water was added to adjust the concentrations so that the concentration of zinc oxide (average particle diameter: 20 nm) should be 10% by mass and the concentration of nanocellulose should be 5% by mass to obtain a mixture. The mixture was thickened, and no precipitation was observed.

[Examples 8 to 12]

Nanocellulose-containing compositions were obtained in the same manner as Example 7, except that oxidized celluloses of Production Examples 2 to 6 were used.

Table 3 shows the evaluation result of the nanocellulose-containing compositions of Examples 7 to 12.

The evaluation criteria of "thickening" and "precipitation" are the same as in Table 2.

[Table 3]

| Examples | Oxidized cellulose | Average fiber length (nm) | Average fiber width (nm) | Thickening | Precipitation |
|---|---|---|---|---|---|
| 7 | Production Example 1 | 165 | 4.2 | A | A |
| 8 | Production Example 2 | 160 | 3.3 | A | A |
| 9 | Production Example 3 | 230 | 4.4 | B | B |
| 10 | Production Example 4 | 200 | 4.0 | A | A |
| 11 | Production Example 5 | 220 | 4.3 | A | A |
| 12 | Production Example 6 | 230 | 4.5 | B | B |

[Comparative Example 1]

A mixture was obtained in the same manner as Example 1, except that dispersion by stirring with a homomixer was not performed. After standing this mixture for 2 days at 23°C, thickening was not observed, and precipitation of zinc oxide was observed. Since thickening was not observed and precipitation of zinc oxide was observed, it was clear that miniaturization did not progress. That is, no nanocellulose-containing composition was obtained.

A transmission phase contrast observation using an optical microscope (product number: LV100ND, manufactured by Nikon Corporation) showed that oxidized cellulose did not become finer and remained coarse. Furthermore, since the above mixture could not be analyzed by [Measurement method of Fiber Length and Fiber Width], nanocellulose could not be observed, and the average fiber length and the average fiber width were not calculated.

[Comparative Example 2]

(Preparation of oxidized cellulose)

Oxidized cellulose was prepared by TEMPO oxidation. In a beaker, 0.8 g of TEMPO, 5.0 g of sodium bromide, and pure water were stirred to produce an aqueous solution.

The aqueous solution was warmed to 25°C in a constant temperature water bath while being stirred at 200 rpm using a propeller-type stirring blade by a stirrer (a three-one motor, BL600), manufactured by Shinto Scientific Co., Ltd., and 50 g of powder pulp (VP-1), manufactured by TDI Corporation, was added as a cellulose raw material.

0.1 M sodium hydroxide was added and stirred to prepare an aqueous solution with a pH of 10.0. To this solution, 129 g of an aqueous sodium hypochlorite solution with an available chlorine concentration of 13.2% by mass was added, and 0.1 M sodium hydroxide was added to adjust the pH of the reaction system to 10.0 while keeping the temperature of the reaction mixture at 25°C in the same constant temperature water bath, and the stirring was continued for 2 hours. After the end of the reaction, centrifugation (1000 G, 10 minutes) and decantation were repeated to recover oxidized cellulose.

(Preparation of CNF-blended Composition)

Using oxidized cellulose obtained by TEMPO oxidation, pure water was added to adjust the concentrations so that the concentration of zinc oxide (average particle diameter: 20 nm) should be 10% by mass and the concentration of TEMPO-oxidized cellulose should be 5% by mass, and the mixture was stirred in a homomixer at 10,000 rpm for 10 minutes.

Transmission phase contrast observation using an optical microscope (product number: LV100ND, manufactured by Nikon Corporation) showed that oxidized cellulose did not become finer and remained coarse. Furthermore, since the above mixture could not be analyzed by [Measurement method of Fiber Length and Fiber Width], nanocellulose could not be observed, and the average fiber length and the average fiber width were not calculated.

Industrial Applicability

The present invention is industrially applicable in the field of using nanocellulose. Specifically, the present invention is industrially applicable in the field of resins, fibers, rubbers, foods, cosmetics, medical supplies, paints, inks, sheets, films, and the like.

**Claims**

1. A production method of a composition containing nanocellulose, the method comprising:

   a step of stirring a mixture containing oxidized cellulose and a component constituting the composition other than the nanocellulose to fibrillate the oxidized cellulose into the nanocellulose,
   the oxidized cellulose including an oxide of a cellulose raw material by a hypochlorous acid or a salt thereof.

2. The production method according to claim 1, wherein
   the mixture further contains a dispersion medium.

3. A production method of a composition containing nanocellulose, the method comprising:

   a step of stirring oxidized cellulose to fibrillate the oxidized cellulose into the nanocellulose and consecutively adding a component constituting the composition other than the nanocellulose,
   the oxidized cellulose including an oxide of a cellulose raw material by a hypochlorous acid or a salt thereof.

4. The production method according to claim 3, wherein
   the stirring of the oxidized cellulose and the addition of the component are performed in one-pot.

5. The production method according to claim 3 or 4, wherein
   the oxidized cellulose is dispersed in a dispersion medium.

6. The production method according to any one of claims 1 to 5, wherein
   the oxidized cellulose is substantially free of a N-oxyl compound.

7. The production method according to any one of claims 1 to 6, wherein
   the oxidized cellulose has a degree of polymerization of 600 or less.

8. The production method according to any one of claims 1 to 7, wherein
   a light transmittance of a nanocellulose water dispersion is 60% or more, the nanocellulose water dispersion being obtained by a fibrillation treatment of a water dispersion of the oxidized cellulose with a concentration of 0.1% by mass with a planetary centrifugal mixer under a condition of an orbital speed of 2000 rpm and a rotation speed of 800 rpm for 10 minutes.

9. The production method according to any one of claims 1 to 8, wherein
   the stirring is performed in an in-liquid disperser.

10. The production method according to any one of claims 1 to 9, wherein
    the component contains an inorganic particle.

**11.** The production method according to any one of claims 1 to 10, wherein
the component contains a resin or a rubber, or a raw material monomer thereof.

**12.** The production method according to any one of claims 1 to 11, wherein
a total amount of the oxidized cellulose and the nanocellulose contained in the composition is 0.1% to 90% by mass based on a total mass of components (excluding solvents and dispersion mediums) constituting the composition.

## INTERNATIONAL SEARCH REPORT

| International application No. |
| --- |
| **PCT/JP2021/041521** |

**A.    CLASSIFICATION OF SUBJECT MATTER**

*C08L 1/04*(2006.01)i; *C08L 101/00*(2006.01)i; *C08K 3/00*(2018.01)i
FI:   C08L1/04; C08K3/00; C08L101/00

According to International Patent Classification (IPC) or to both national classification and IPC

**B.    FIELDS SEARCHED**

Minimum documentation searched (classification system followed by classification symbols)

C08L1/04; C08L101/00; C08K3/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2020/027307 A1 (TOAGOSEI CO., LTD.) 06 February 2020 (2020-02-06) claims, paragraphs [0028]-[0033], examples | 1-12 |
| Y | | 6 |
| X | JP 2017-193814 A (KANTO DENKA KOGYO KK) 26 October 2017 (2017-10-26) claims, paragraphs [0009], [0016], [0021], [0025]-[0029], examples | 1-12 |
| Y | | 6 |
| X | JP 2018-62657 A (JUJO PAPER CO., LTD.) 19 April 2018 (2018-04-19) claims, paragraphs [0056]-[0059], [0063]-[0074], [0087]-[0091], manufacturing example 1, example 1 | 1-5, 7-12 |
| Y | | 6 |
| A | WO 2019/235557 A1 (KAO CORP.) 12 December 2019 (2019-12-12) | 1-12 |
| A | WO 2020/080393 A1 (OJI HOLDINGS CORP.) 23 April 2020 (2020-04-23) | 1-12 |

☐ Further documents are listed in the continuation of Box C.    ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **23 December 2021** | **11 January 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2021/041521** |

| Patent document cited in search report | | | Publication date (day/month/year) | Patent family member(s) | | | Publication date (day/month/year) |
| --- | --- | --- | --- | --- | --- | --- | --- |
| WO | 2020/027307 | A1 | 06 February 2020 | EP | 3831856 | A1 | |
| | | | | claims, paragraphs [0048]-[0054], examples | | | |
| | | | | CN | 112513101 | A | |
| JP | 2017-193814 | A | 26 October 2017 | (Family: none) | | | |
| JP | 2018-62657 | A | 19 April 2018 | (Family: none) | | | |
| WO | 2019/235557 | A1 | 12 December 2019 | US | 2021/0054541 | A1 | |
| | | | | CN | 112166216 | A | |
| | | | | TW | 202005986 | A | |
| WO | 2020/080393 | A1 | 23 April 2020 | JP | 2020-63351 | A | |
| | | | | JP | 2020-158685 | A | |
| | | | | CN | 112867738 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018230354 A
- WO 2020027307 A
- WO 2015068818 A
- JP 2020128513 A

**Non-patent literature cited in the description**

- *Sustainable Chem. Eng.,* 2020, vol. 8 (48), 17800-17806